(19) Europäisches Patentamt
European Patent Office
Office européen des brevets

(11) Veröffentlichungsnummer: **0 318 720 B1**

(12) **EUROPÄISCHE PATENTSCHRIFT**

(45) Veröffentlichungstag der Patentschrift: **20.05.92**

(51) Int. Cl.$^5$: **F16C 1/22**

(21) Anmeldenummer: **88118395.8**

(22) Anmeldetag: **04.11.88**

(54) **Vorrichtung zur automatischen Längenverstellung eines Bowdenzuges.**

(30) Priorität: **02.12.87 DE 3740776**
**18.02.88 DE 3805046**
**30.05.88 DE 3818323**

(43) Veröffentlichungstag der Anmeldung:
**07.06.89 Patentblatt 89/23**

(45) Bekanntmachung des Hinweises auf die Patenterteilung:
**20.05.92 Patentblatt 92/21**

(84) Benannte Vertragsstaaten:
**ES FR GB NL SE**

(56) Entgegenhaltungen:
**DE-A- 2 014 129**
**GB-A- 443 123**

(73) Patentinhaber: **KÜSTER & Co. GmbH**
**Postfach 1157**
**W-6332 Ehringshausen(DE)**

(72) Erfinder: **Jakob, Willi**
**Berliner Strasse 4**
**W-6332 Ehringshausen(DE)**
Erfinder: **Marscholl, Klaus**
**Kreisstrasse 5**
**W-6332 Ehringshausen-Breitenbach(DE)**

(74) Vertreter: **Müller, Eckhard, Dr.**
**Eifelstrasse 14**
**W-6257 Hünfelden 2(DE)**

**EP 0 318 720 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3.08/2.19/2.0)

## Beschreibung

Die Erfindung betrifft eine Vorrichtung zur automatischen Längenverstellung des Schlauches eines Bowdenzuges, in dem ein Seil geführt ist, das zwischen einem Betätigungselement und einem zu betätigenden Getriebeglied gespannt ist; insbesondere des Betätigungszuges für die Handbremse in Automobilen und ähnlichen Fahrzeugen.

Derartige Vorrichtungen sind bereits bekannt, z.B. aus der DE-A-20 14 129 und der DE-A-21 39 278. Die in diesen und weiteren Druckschriften beschriebenen Vorrichtungen zur automatischen Längenverstellung von Bowdenzugschläuchen arbeiten alle mit ineinandergreifenden Verzahnungen, die unter Federdruck in Eingriff stehen und bei betriebsbedingter Verkürzung des Bowdenzug-Schlauches diesen dadurch verlängern, daß unter dem Druck einer weiteren, zwischen einem ortsfesten Lager und dem Schlauch eingesetzten Feder, der Schlauch weiter von der ortsfesten Lagerstelle hinweggedrückt, also praktisch verlängert wird, wobei die ineinandergreifenden Zähne übereinander hinweg ratschen.

Vorrichtungen dieser Art sind jedoch nicht geeignet, bei Bowdenzügen eingesetzt zu werden, mit denen größere Kräfte übertragen werden. Damit bei diesen bekannten Vorrichtungen die automatische Nachstellung zufriedenstellend funktioniert, darf die Zahntiefe der ineinandergreifenden Zähne nicht zu groß sein, genauso wie auch die den Eingriff sicherstellende Feder nicht zu stark sein darf. Hieraus ergibt sich, daß mit einem eine solche Vorrichtung beinhaltenden Bowdenzug stets nur geringe Kräfte übertragen werden können, z.B. die relativ geringen Kräfte, die mit einem Gas-Zug in Automobilen übertragen werden. Bei größeren Kräften, wie sie z.B. bei der Hand- bzw. Feststellbremse in Automobilen zu übertragen sind (im Durchschnitt ca. 200 kg), hält die verhältnismäßig feine Verzahnung die Flächenpressung nicht aus; die Zähne werden deformiert, gequetscht etc. Macht man andererseits die Zahntiefe so groß, daß die Zähne diese höhere Belastung aushalten, dann funktioniert wiederum die Nachstellung nicht zufriedenstellend.

Der Erfindung liegt die Aufgabe zugrunde, eine Vorrichtung der genannten Art anzugeben, die auch in Bowdenzüge einsetzbar ist, mit denen größere Kräfte übertragen werden, z.B. in Bowdenzügen zur Betätigung der sogenannten Handbremse (Feststellbremse) in Automobilen.

Die Aufgabe ist durch eine Vorrichtung gelöst, welche die in Anspruch 1 angegebenen Merkmale aufweist.

Diese Vorrichtung beinhaltet als wesentliches Bauelement ein Paket parallel liegender, quer zur Schlauchachse verschiebbarer Distanzscheiben, die auf dem Schlauch aufliegen und bei betriebsbedingter Verkürzung des Schlauches bzw. Verlängerung des Seiles nacheinander vor das Schlauchende fallen.

Der Ersteinbau eines eine solche Vorrichtung enthaltenden Bowdenzuges erfolgt stets in einer Zuordnung von Schlauchende und Scheiben, bei der der Schlauch am weitesten in das Gehäuse der Vorrichtung hineingeschoben ist und demzufolge alle Distanzscheiben auf dem Schlauchumfang aufsitzen. Erst bei der ersten Bowdenzugbetätigung und den später erfolgenden weiteren Betätigungen fallen die Distanzscheiben nacheinander vor das Schlauchende.

Eine Schwierigkeit bei der Verwendung eines solchen Bowdenzuges in der Praxis, z.B. im Automobilbau, ergibt sich noch dann, wenn der Bowdenzug während seiner Lebenszeit einmal ausgebaut wird, wie dies z.B. in Reparaturwerkstätten erforderlich sein kann. Wenn nämlich die Enden des Seiles von dem Betätigungselement und dem zu betätigenden Getriebeglied gelöst werden, drückt die Druckfeder das Schlauchende nach außen aus dem Gehäuse heraus, wobei dann alle Distanzscheiben vor das Schlauchende fallen. Beim Wiedereinbau müssen daher zunächst alle Distanzscheiben vor dem Schlauchende weggedrückt, d.h. in ihre Ausgangslage zurückgedrückt werden. Es müssen demnach Mittel vorgesehen sein, die es dem Mechaniker erlauben, die Scheiben zurückzudrücken, damit der Bowdenzug in seinem ursprünglichen Zustand (= Schlauch am weitesten in das Gehäuse hineingeschoben) wieder eingebaut werden kann.

Diese Mittel weisen die in den Unteransprüchen angegebenen Merkmale auf.

In der Zeichnung ist die Erfindung in drei Ausführungsbeispielen dargestellt. Es zeigen:

| | |
|---|---|
| Fig. 1 | schematisch eine Vorrichtung gemäß Erfindung mit Bowdenzug im Schnitt, in einer ersten Ausführungsform, |
| Fig. 2 | einen Schnitt durch Fig. 1 in Höhe II-II |
| Fig. 3 | einen Schnitt durch Fig. 1 in Höhe III-III |
| Fig. 4 | eine Vorrichtung gemäß Fig. 1 in einer zweiten Ausführungsform, die mit Mitteln zur Rückstellung der Distanzscheiben vorsehen ist, |
| Fig. 5 | einen Schnitt durch Fig. 4 in Höhe V-V, |
| Fig. 6 | einen Schnitt durch Fig. 4 in Höhe VI-VI, |
| Fig. 7 | die erfundene Vorrichtung in einer dritten Ausführungsform, die ebenfalls mit Mitteln zur Rückstellung der Distanzscheiben versehen ist, in |

einem Längsschnitt,

Fig. 8, 9 eine Ansicht des Gehäuses der Fig. 7 aus zwei um 90° gedrehten Richtungen,

Fig. 10 einen Schnitt durch Fig. 8 in Höhe X-X,

Fig. 11 eine Ansicht der Fig. 8 in Richtung A,

Fig. 12 die Schlauchendhülse der dritten Ausführungsform im Längsschnitt,

Fig. 13 einen Schnitt durch Fig. 12 in Höhe XIII-XIII,

Fig. 14 einen Schnitt durch Fig. 12 in Höhe XIV-XIV,

Fig. 15 einen Schnitt durch Fig. 7 in Höhe XV-XV,

Fig. 16 einen Schnitt durch Fig. 7 in Höhe XVI-XVI,

Fig. 17 einen Schnitt wie Fig. 16, jedoch die Hülse um 90° gedreht,

Fig. 18 die Abdeckkappe in Ansicht,

Fig. 19 eine Draufsicht auf Fig. 7 in Richtung B, teilweise geschnitten,

Fig. 20 eine Ansicht der Vorrichtung der Fig. 7 in ihrer Verschiebe-Endstellung,

Fig. 21 eine Ansicht der Vorrichtung der Fig. 7 in ihrer Rückstellposition,

Fig. 22 eine Ansicht wie Fig. 21, jedoch die Hülse um einen weiteren Betrag zurückgestellt.

In den Figuren 1 - 6 ist mit 1 das Seil des Bowdenzuges bezeichnet, das in einem Schlauch 2 geführt wird, der in bekannter Weise in aller Regel aus einem schraubenförmig gewundenen Draht besteht, innen und außen meist mit einer Kunststoffschicht überzogen. Der Schlauch ist auf eine Hülse 3 fest aufgesteckt, die daher das Schlauchende bildet. Die Hülse 3 ist in ihrem Außendurchmesser abgestuft und hat somit einen Bund 3a.

Die Hülse 3 ist in die Axialbohrung eines Gehäuses 4 gesteckt und in dieser Bohrung in Längsrichtung verschiebbar. Eine Druckfeder 5 ist bestrebt, die Hülse 3 mit dem Schlauch 2 in der Darstellung der Fig.1 nach rechts aus dem Gehäuse 4 herauszudrücken. Letzteres ist in einer Wand 9 durch einen Sicherungsring 10 ortsfest gehalten.

Das Gehäuse 4 enthält in seinem Inneren eine Anzahl von parallel zueinander liegender Distanzscheiben 6, deren äußere Form aus den Figuren 2 und 3 erkennbar ist. Diese Distanzscheiben 6 haben alle die gleiche Dicke und sind z.B. zwei Millimeter dick. Sie sitzen teilweise auf dem großen Durchmesser der Hülse 3 auf, teilweise sind sie aber auch auf den kleinen Durchmesser der Hülse 3 eingefallen. Jede Scheibe 6 steht unter Wirkung einer Zugfeder 7, die um einen Stift 8 im Gehäuse gelegt ist.

Funktionsweise: Im Anfangsstadium, z.B. bei der Montage des Bowdenzuges, ist das Schlauchende, d.h. die Hülse 3 ganz nach links (Fig. 1) verschoben, so daß alle Distanzscheiben 6 auf dem großen Durchmesser der Hülse 3 aufsitzen. Nachdem die Enden des Seiles 1 an dem Betätigungselement und dem zu betätigenden Getriebeteil befestigt sind (nicht gezeigt), wird der Schlauch 2 freigegeben, so daß die Druckfeder 5 den Schlauch auf die richtige Länge drücken kann. Dabei fallen bereits die ersten (linken) Distanzscheiben 6 auf den kleinen Durchmesser der Hülse 3 ein.

Verkürzt sich nun während des Betriebes der Schlauch 2 (oder längt sich das Seil 1, was auf dasselbe hinausläuft), so muß der Schlauch 2 verlängert werden. Dies geschieht durch die Druckfeder 5, welche die Hülse 3 aus dem Gehäuse 4 herausdrückt. Dabei fallen nacheinander die Distanzschen 6 auf den kleinen Durchmesser der Hülse 3 ein und bilden in ihrer Gesamtheit (der eingefallenen Scheiben) das Widerlager für die auf das Seil ausgeübte Kraft. Die eingefallenen Scheiben 6 werden zwischen dem Bund 3a und der Wand 4a des Gehäuses 4 geklemmt. Bei einem derart groß bemessenen Widerlager können mit dem Seil 1 ganz offensichtlich wesentlich größere Kräfte übertragen werden, als dies mit ähnlichen Vorrichtungen nach dem Stand der Technik der Fall ist.

Aus diesem Grunde eignet sich die erfundene Vorrichtung besonders gut als Längenverstellvorrichtung für den Handbremszug eines Automobiles. Wäre eine solche Vorrichtung nicht vorhanden, so müßte der Handbremszug zur Feststellung des Fahrzeuges in dessen Neuzustand z.B. 5 cm herausgezogen werden. Hat sich dann der Schlauch nach mehreren tausend Betätigungen entsprechend gesetzt und zusätzlich womöglich auch das Seil noch etwas gelängt, so müßte dann der Zug immer weiter herausgezogen werden, um die ursprüngliche Feststellwirkung wieder zu erreichen, zum Schluß vielleicht 10 oder 15 cm, bis schließlich eine Feststellwirkung überhaupt nicht mehr erreicht werden kann und die Schlauchlänge mittels der bekannten schraubbaren Endfittings in der Werkstatt neu einjustiert werden muß.

Die erfundene Vorrichtung ermeidet dies und hält die Herausziehlänge des Handbremszuges praktisch konstant, weil nach jeweils einer Scheibendicke Verkürzung des Schlauches beim Loslassen des Zuges die nächste Distanzscheibe 6 auf die Hülse 3 niederfällt und den Schlauch wieder entsprechend verlängert.

In den Fig. 4, 5 und 6 ist eine weiterentwickelte Ausführungsform der erfundenen Vorrichtung dargestellt, wobei gleiche Teile mit den gleichen Bezugszeichen bezeichnet sind. In dieser Ausführungsform sind die Distanzscheiben 6 sowie die Wände 4b und 4c des Gehäuses 4 mit zueinander fluchtenden Langlöchern 6a, 4b′, 4c′ versehen. Durch diese Langlöcher ist ein Stift 11 gesteckt, der außerhalb der Wände 4b, 4c an Knöpfen 11a erfaßbar ist. Dieser Stift 11 dient zum Zurücksetzen der bereits angefallenen Distanzscheiben in ihre Ausgangslage.

In Fig. 4 ist dargestellt, daß ein Teil der Distanzscheiben 6 bereits eingefallen ist, und dabei den Stift 11 in die gezeigte untere Position gedrückt hat. Soll die Hülse 3, ausgehend von der gezeigten Stellung, z.B. durch eine andere Justierung des Bowdenzuges, wieder in der Darstellung der Fig. 4 gegen die Kraft der Feder 5 weiter nach links verschoben werden, so ist dies nur möglich, wenn die bereits eingefallenen Distanzscheiben 6 wieder angehoben und damit in ihre Ausgangslage zurückgebracht werden. Dies kann geschehen durch Erfassen der beiden Knöpfe 11a, z.B. mit Daumen und Zeigefinger, und Anheben des Stiftes 11 in Pfeilrichtung A, wie ohne weitere Darstellung erkennbar ist.

Eine weitere Ausführungsform der erfundenen Vorrichtung ist in den Figuren 7 - 22 dargestellt. Bei dieser Ausführungsform ist ebenfalls die Möglichkeit gegeben, die Distanzscheiben in ihre Ausgangslage zurück zu setzen, nachdem sie ganz oder teilweise eingefallen sind. Im Gegensatz zu der Ausführungsform gemäß den Figuren 4, 5 und 6 besitzt diese Ausführungsform jedoch ein allseitig geschlossenes Gehäuse. Es sind somit die Langlöcher 4b′ und 4c′ vermieden, durch die während des Betriebes Wasser und Schmutz in die Vorrichtung dringen könnte.

In den Figuren ist mit 101 das Seil bezeichnet, das zwischen einem nicht gezeigten Betätigungselement und einem ebenfalls nicht gezeigten Getriebeglied ausgespannt ist. Das Seil 101 wird in einem Schlauch 102 geführt, der in bekannter Weise aus einer auf Block gewickelten Spirale besteht. Der Schlauch endet in einer Hülse 103, mit der er bei 103a fest verbunden ist.

Die Hülse 103 steckt in einem Gehäuse 104, das seinerseits in einer Wand 109 ortsfest gehalten ist. Zwischen dem Gehäuse 104 und der Hülse 103 ist eine Feder 106 eingesetzt, die bestrebt ist, die Hülse 103 aus dem Gehäuse 104 herauszudrükken.

Die Hülse 103 hat die aus den Figuren 12, 13 und 14 erkennbare Form, insbesondere im linken Teil der Figur 12 die aus Figur 13 erkennbare runde Außenform, während sie im rechten Teil die aus Figur 14 ersichtliche Außenform besitzt. Bei 103a stoßen diese beiden Querschnittsformen aneinander und bilden dort einen Bund. Die beiden Teile unterscheiden sich dadurch, daß der rechte Teil im Querschnitt etwa rechteckig ist, d.h. in der einen Richtung das größere Außenmaß "a" und in der anderen Richtung das kleinere Außenmaß "b" hat (Figur 14). Im linken Teil ist der Querschnitt kreisförmig mit dem Durchmesser "c".

Innerhalb des Gehäuses 104 ist in der aus Figur 7 erkennbaren Weise eine Reihe von Distanzscheibenpaaren 106a, 106b angeordnet, welche die in den Figuren 15 - 17 gezeigte Form haben. Jedes Paar wird von einem Federring 107 umgriffen, der beide Distanzscheiben nach innen auf die Hülse 103 drückt.

Auf der in Figur 7 rechten Seite wird das Gehäuse 104 von einer Abdeckkappe 111 abgeschlossen, die mit einer Wulst 110a in eine Nut 104b des Gehäuses greift und in dieser Nut um 90° hin und her gedreht werden kann. Die Endstellungen dieser 90°-Drehung sind durch nicht gezeigte Anschläge bestimmt.

Eine Ansicht der Abdeckkappe ist in Fig. 18 gezeigt. Dort ist erkennbar, daß die Kappe zentral einen Durchbruch 110 in Form des Querschnittes der Hülse 103 aus Figur 14 hat. Durch diesen Durchbruch ist die Hülse 103 gesteckt (Figur 7).

In Form des Querschnittes der Hülse 103 aus Fig. 14 hat auch das Gehäuse 104 eine Vertiefung 112, und zwar in der etwas dickeren Wand 104a, deren Zweck noch erläutert werden wird.

Die vorbeschriebenen Einzelteile wirken wie folgt zusammen: Ausgangsstellung ist eine Stellung, bei der die Hülse 103 am weitesten in das Gehäuse 104 hineingeschoben ist. In dieser - nicht gezeigten-Stellung liegt der Bund 103a der Hülse 103 an der Wand 104a des Gehäuses an und alle Distanzscheibenpaare 106a, 106b sitzen auf dem dickeren Ende (Außenmaß "a") der Hülse auf. Dies ist z.B. in Fig. 16 dargestellt sowie im unteren Teil der Figur 15.

Verkürzt sich nun während des Betriebes der Schlauch 102 z.B. dadurch, daß sich die Spiralwindungen "setzen", oder längt sich das Seil 101 (was hinsichtlich der Funktion auf dasselbe hinausläuft: es kommt Spiel in die Bowdenzugverbindung), so drückt die Feder 106 die Hülse 103 aus dem Gehäuse 104 hinaus. Dabei fallen die Distanzscheibenpaare 106a, 106b nacheinander vor dem Bund 103a, und auf diese Weise wird das Spiel wieder ausgeglichen.

Eine Gradführung der Hülse 103 wird dabei an sich bereits schon durch den Auflagedruck der Scheiben 106a; 106b auf der Hülse erreicht sowie durch den Durchbruch 110 in der Abdeckkappe 111, durch den die Hülse 103 bei ihrer Verschiebung in der Darstellung der Figur 7 nach rechts hindurchgeschoben wird. Im vorliegenden Ausführungsbeispiel ist jedoch noch eine zusätzliche Gradführung vorgesehen. Diese besteht aus einem in der Hülse 103 freigeschnittenen und federnd hervorstehenden Nocken 103b, der in einer Nut 104c des Gehäuses 104 geführt wird. Siehe Fig. 8 und Figur 9.

Die Verschiebung der Hülse 103 in Figur 7 nach rechts ist soweit möglich, bis der Nocken 103b an die erste Distanzscheibe anschlägt. Dabei sind die Abmessungen derart gewählt, daß dies gleichzeitig diejenige Stellung ist, in der das letzte (rechte) Distanzscheibenpaar vor dem Bund 103a fällt.

Diese Stellung wird aber nicht nur dann erreicht, wenn sich der Schlauch 102 um die entsprechende Länge gesetzt bzw. Das Seil 101 um die entsprechende Länge gelängt hat, sonder auch immer dann, wenn der Bowdenzug ausgebaut wird, z.B. bei Durchführung einer Reparatur oder dergleichen. Immer dann, wenn der Schlauch bzw. das Gehäuse nicht mehr zwischen zwei ortsfesten Punkten (Wänden) gehalten wird, kann sich die Feder 105 voll entspannen, mit dem Ergebnis, daß sie dabei die Hülse 103 voll aus dem Gehäuse 104 herausdrückt, so daß sie in die in Figur 20 gezeigte Endstellung gerät.

Um die Vorrichtung wieder in ihre Ausgangsstellung zurückzuversetzen, muß die Hülse gegen die Kraft der Feder 105 wieder in das Gehäuse 104 hineigedrückt werden. Dies ist jedoch nicht ohne weiteres möglich, denn zunächst liegen die Distanzscheibenpaare 106a; 106b vor dem Bund 103a und sperren den Rückweg.

Bei der Ausführungsform nach den Figuren 7 - 22 ist es jedoch möglich, die Abdeckkappe 111 an ihrem Außenumfang zu erfassen und um 90° zu drehen. Dabei wird gleichzeitig die Hülse 103 mitgedreht, denn diese steckt ja im Durchbruch 110 der Kappe. Relativ zu den Distanzscheibenpaaren 106a; 106b gerät die Hülse dabei in eine Stellung, die im Querschnitt in Figur 17 gezeigt ist. Gleichzeitig wird der Nocken 103b durch eine in der Wand 104a ausgearbeitete Kurve 104a′ (Fig. 11) auf den Durchmesser "b" zurückgedrückt, der gleichzeitig der Durchmesser des Querschnittes aus Figur 13 ist.

In dieser Stellung kann nun die Hülse 103 durch die Distanzscheibenpaare (nach links) hindurchgeschoben werden, z.B. dadurch, daß man den Schlauch 102 außerhalb der Gummitülle 113 ergreift und Schlauch und Hülse gegen die Kraft der Feder 105 drückt, bis der Bund 103a an der Wand 104a anschlägt.

In dieser Lage steht die Hülse 103 am in der Figur 21 rechten Ende immer noch etwa um die Materialstärke einer Distanzscheibe (ca. 2 mm) in Eingriff mit dem Durchbruch 110 der Abdeckkappe 111. Wenn nun die Abdeckkappe 111 um diejenigen 90°, die sie vorher in der einen Richrung gedreht wurde, in die entgegengesetzte Richtung zurückgedreht wird, so drücken dabei die Enden 103c, 103d (Figur 14) die Distanzscheibenpaare 106a, 106b gegen die Kraft der Federringe 107 auseinander, so daß die gesamte Vorrichtung in ihre Ausgangsposition zurückgesetzt ist.

In dieser Position muß die Vorrichtung aber auch dann gehalten werden, wenn Schlauch 102 und Gehäuse 104 noch nicht zwischen zwei Wänden oder dgl. ortsfest eingebaut sind, d.h. wenn der Bowdenzug frei herumliegt. Dies bedeutet, daß die Hülse 103 gegen die Kraft der Feder 105 in ihrer Ausgangsposition relativ zum Gehäuse 104 gesichert sein muß.

Um dies zu erreichen, ist die Vertiefung 112 in der Wand 104a vorgesehen, die oben bereits erwähnt wurde, und von der gesagt wurde, daß sie die Form des Querschnittes der Hülse 103 aus Figur 14 besitzt. Diese Form ist z.B. in Figur 7 derart orientiert, daß das Maß "a" aus Figur 14 senkrecht steht. Da beim Rückschieben der Hülse 103 diese nach der 90°-Drehung aber quer liegt, läßt sich die Hülse, wie oben gesagt, tatsächlich nur bis zum Anschlag des Bundes 103a an der Wand 104a zurückschieben. Dabei steht dann das rechte Ende der Hülse 103, wie auch bereits erläutert, immer noch im Durchbruch 110 der Abdeckkappe 111 (Figur 21).

Wenn aber nun zum Auseinanderdrücken der Distanzscheibenpaare 106a, 106b die Abdeckkappe 111 um die genannten 90° zurückgedreht wird, dann "passen die Querschnittsform der Hülse 103 und die Form der Vertiefung 112 aufeinander. Dies hat zur Folge, daß die Hülse 103 noch um die Tiefe der Vertiefung 112 weiter in das Gehäuse 104 hineingeschoben werden kann. Dabei rutscht dann das in Figur 21 rechte Ende der Hülse 103 aus der Abdeckkappe 111 heraus. Die Abdeckkappe 111 ist daher frei und kann um einen beliebigen Winkel, maximal um 90°, in die Querlage des Durchbruches 110 gedreht werden. In dieser Stellung "passen" Durchbruch 110 und Querschnittsform der Hülse 103 nicht mehr aufeinander. Der Schlauch kann daher jetzt losgelassen werden; die Feder 105 kann die Hülse nicht herausdrücken, denn diese wird von der Abdeckkappe gehalten (Figur 22).

Dieser Zustand der Vorrichtung ist ihr Anlieferungszustand, in dem der Bowdenzug an eine Fabrik, eine Werkstatt oder dgl. angeliefert wird. Die Hülse 103 ist voll in das Gehäuse 104 hineingedrückt und wird dort von der Kappe 111 gehalten. Beim Einbau wird dann zunächst das Gehäuse 104 in der einen Wand 109 und das andere Schlauchende in einer anderen Wand (nicht gezeigt) örtlich festgelegt. Dann werden die beiden Enden des Seiles 101 an dem Betätigungselement und dem zu betätigenden Getriebeglied befestigt und schließlich wird die Abdeckkappe 111 in diejenige Stellung zurückgedreht, in der der Durchbruch 110 und die Querschnittsform der Hülse 103 minteinander fluchten.

In diesem Moment kann sich die Feder 105 entspannen und wird die Hülse 103 so weit aus dem Gehäuse 104 herausdrücken, daß die Gesamtschlauchlänge der Seillänge angepaßt ist. Es ist vorgesehen, daß dabei bereits die ersten ein, zwei oder möglicherweise auch drei Distanzscheibenpaare vor dem Bunde 103a einfallen. Das weitere Einfallen der Distanzscheiben erfolgt dann in automatischer Längenverstellung des Schlauches, wie beschrieben.

Das Gehäuse 104 ist rundum von einem Mantel 114 umgeben, der am besten aus den Figuren 15 - 17 und 19 - 22 erkennbar ist. Das ganze Gehäuse wird von diesem Mantel umschlossen, so daß die Distanzscheibenpaare 106a, 106b vor jeglichem Spritzwasser, Schmutz und dgl. geschützt sind.

Abschließend sei noch darauf hingewiesen, daß die Hülse 103 in ihrer rechten Hälfte (Figur 12) in ihrem Querschnitt (Figur 14) an ihren diametral gegenüberliegenden Ecken dreieckige Vorsprünge 116, 117 aufweist. Diese Vorsprünge haben für die Rückstellung der Distanzscheibenpaare und der Hülse 103 keine funktionelle Bedeutung. Sie sind lediglich angebracht, um die Fläche des Bunde 103a zu vergrößern und somit die Flächenpressung auf den Distanzscheiben 106a; 106b zu verringern. Insbesondere sind diese Ecken nicht beteiligt an der Rücksetzung der Distanzscheiben 106a, 106b in ihre Ausgangslage. Diese Rücksetzung wird, wie beschrieben, alleine von den Ecken 103c, 103d bewirkt.

## Patentansprüche

1. Vorrichtung zur automatischen Längenverstellung des Schlauches (2, 102) eines Bowdenzuges, in dem ein Seil (1, 101) geführt wird, das zwischen einem Betätigungselement und einem zu betätigenden Getriebeglied gespannt ist, mit einem gestellfesten Gehäuse (4, 104) mit axialer Bohrung, durch welches das Schlauchende gesteckt ist, und mit einer zwischen dem Gestell bzw. dem Gehäuse (4, 104) und dem Schlauch (2, 102) eingesetzten Druckfeder (5, 105), die bestrebt ist, den Schlauch (2, 102) aus der Axialbohrung herauszudrücken, gekennzeichnet durch ein Paket parallel liegender, quer zur Schlauchachse verschiebbarer Distanzscheiben (6, 106a, 106b), die auf dem Schlauch (2, 3, 103) aufliegen und nacheinander vor das Schlauchende fallen, wenn dieses infolge betriebsbedingter Schlauchverkürzung bzw. Seilverlängerung durch die Druckfeder (5, 105) aus der Axialbohrung gedrückt wird, und sich dabei einerseits an der Stirnwand des Schlauches (2, 102) und andererseits am Gehäuse (4, 104) bzw. dem Gestell (9, 109) abstützen.

2. Vorrichtung nach Anspruch 1, dadurch gekennzeichnet, daß für jede Distanzscheibe (6, 106a, 106b) ein Federelement (7, 107) vorgesehen ist, das jede einzelne Scheibe in Richtung der Bowdenzug-Längsachse drückt.

3. Vorrichtung nach den Ansprüchen 1 und 2, dadurch gekennzeichnet, daß das Schlauchende von einer Hülse (3, 103) gebildet wird, die mit ihrem Außenumfang zum Schlauchende hin verkleinert ist und an der Übergangsstelle zwischen großem und kleinem Durchmesser einen Bund (3a, 103a) bildet, gegen den die Distanzscheiben (6, 106a, 106b) am Schlauchende anliegen.

4. Vorrichtung nach den Ansprüchen 1 - 3, dadurch gekennzeichnet, daß das Distanzscheiben-Paket (6, 106a, 106b) in einem Gehäuse (4, 104) gelagert ist, und daß außerhalb des Gehäuses (4, 104) zugängliche mechanische Mittel (11, 111) vorgesehen sind, durch deren Betätigung die Distanzscheiben in ihre Ausgangslage rücksetzbar sind.

5. Vorrichtung nach Anspruch 4, dadurch gekennzeichnet, daß die einzelnen Distanzscheiben (6) mit zueinander fluchtenden Langlöchern (6a) versehen sind, und daß die vordere und hintere Gehäusewand (4b; 4c) ebenfalls je ein hierzu fluchtendes Langjoch (4b′; 4c′) enthält, und daß die mechanischen Mittel aus einem Stift (11) bestehen, der durch diese Langlöcher (4b′; 4c′; 6a) gesteckt ist und außen an der vorderen und hinteren Gehäusewand derart erfaßbar ist, daß alle niedergefallenen Distanzscheiben (6) durch Anheben des Stiftes (11) in ihre Ausgangslage rücksetzbar sind.

6. Vorrichtung nach den Ansprüchen 1 - 3, gekennzeichnet durch folgende Merkmale:
   a) Die vordere Hälfte der Hülse 103 besitzt in bekannter Weise einen runden Querschnitt, während die hintere Hälfte einen Querschnitt mit einer nach außen ragenden Kante (103c, 103d) aufweist;
   b) die Hülse (103) ist um die Längsachse um einen 90°-Winkel zwischen einer Arbeitsstellung und einer Rückführstellung drehbar;
   c) jede Distanzscheibe (106a, 106b) besitzt innen eine Ausnehmung, von denen bei allen eingefallenen Distanzscheiben ein Kanal gebildet wird, durch den hindurch die Hülse (103) in ihrer Rückführstellung mit ihren nach außen vorragenden Kanten (103c, 103d) gegen die Kraft der Druckfeder (105) in ihre Ausgangsstellung rückführbar ist;

d) am Gehäuse (104) ist auf der dem Bowdenzugschlauch zugekehrten Seite eine Abdeckkappe (111) aufgesetzt, die einen Durchbruch (110) mit einem Profil aufweist, das dem Querschnitt der hinteren Hälfte der Hülse (103) entspricht, so daß letztere in diesem Durchbruch (110) verschiebbar ist,

e) die Abdeckkappe (111) ist auf dem Gehäuse (104) zwischen zwei Endstellungen um diejenigen 90° drehbar, die der Winkeldrehung der Hülse (103) zwischen ihrer Arbeitsstellung und ihrer Rückführstellung entspricht, und

f) nach erfolgter Rückführung der Hülse (103) in ihre Ausgangsstellung dient bei Rückstellung der Hülse (103) in ihre Arbeitsstellung die nach außen ragende Kante (103c; 103d) als Hebemechanismus zum Rücksetzen aller Distanzscheiben (106a, 106b) min ihre Ausgangsposition.

**7.** Vorrichtung nach Anspruch 6, dadurch gekennzeichnet, daß die Distanzscheiben als Distanzscheiben-Paare (106a, 106b) ausgebildet sind und jedes Paar symmetrisch zu beiden Seiten der Hülse (103) in einer Ebene senkrecht zur Hülse (103) angeordnet ist.

**8.** Vorrichtung nach den Ansprüchen 6 und 7, dadurch gekennzeichnet, daß jedes Distanzscheiben-Paar von einem Federring (107) umschlossen wird, der beide Distanzscheiben (106a, 106b) nach innen auf die Hülse drückt.

**9.** Vorrichtung nach den Ansprüchen 6 - 8, dadurch gekennzeichnet, daß das Gehäuse (104) in seiner Wand (104a) eine Vertiefung (112) besitzt, in die die Hülse (103) in ihrer Arbeitsstellung mit ihrem Bund (103a) so weit einschiebbar ist, daß die Hülse (103) aus dem Durchbruch (110) der Deckkappe (111) herausrutscht, so daß die Deckkappe relativ zur Hülse verdrehbar ist und dadurch die Hülse in ihrer eingeschobenen Stellung sichert.

## Claims

**1.** Device for the automatic length adjustment of the hose (2, 102) of a Bowden pull, in which a cable (1, 101) is guided, which is stretched between an actuating element and a gear member to be actuated, with a housing (4, 104), which is fast with the frame and has an axial bore, through which the hose end is plugged, and with a compression spring (5, 105), which is inserted between the hose (2, 102) and either the frame or the housing (4, 104) and endeavours to urge the hose (2, 102) out of the axial bore, characterised by a packet of shims (6, 106a, 106b), which lie parallelly, rest on the hose (2, 3; 103), are displaceable transversely to the hose axis and which fall one after the other in front of the hose end when this is urged out of the axial bore by the compression spring (5, 105) in consequence of operationally caused shortening or lengthening of the hose and in that case bear by the one end against the end wall of the hose (2, 102) and by the other end against either the housing (4, 104) or the frame (9, 109).

**2.** Device according to claim 1, characterised thereby, that a spring element (7, 107) is provided for each shim (6, 106a, 106b) and urges each individual shim in the direction of the longitudinal axis of the Bowden pull.

**3.** Device according to the claims 1 and 2, characterised thereby, that the hose end is formed by a sleeve (3, 103), which is reduced in its external circumference towards the hose end and forms a collar (3a, 103a), against which the shims (6, 106a, 106b) bear at the hose end, at the transition point between large and small diameter.

**4.** Device according to the claims 1 to 3, characterised thereby, that the packet of shims (6, 106a, 106b) is borne in a housing (4, 104) and that mechanical means (11, 111) are provided, which are accessible outside the housing (4, 104) and through the actuation of which the shims are resettable into their initial position.

**5.** Device according to claim 4, characterised thereby, that the individual shims (6) are provided with mutually aligned elongate holes (6a), that the front and the rear housing wall (4b; 4c) each likewise contains a respective elongate hole (4b'; 4c') aligned therewith and that the mechanical means consist of a pin (11), which is plugged through these elongate holes (4b', 4c'; 6) and seizable externally at the front and the rear housing wall in such a manner that all shims (6), that have dropped down, are resettable into their initial position.

**6.** Device according to the claims 1 to 3, characterised by the following features:

a) the front half of the sleeve (103) has a round cross-section in known manner, while the rear half displays a cross-section with an outwardly projecting edge (103c, 103d);

b) the sleeve (103) is rotatable between an operative setting and a return setting through an angle of 90° about the longitudinal axis;

c) each shim (106a, 106b) internally has a recess which - when all shims have dropped in - forms a channel, through which the sleeve (103) in its return setting is returnable by its outwardly projecting edges (103c, 103d) into its initial setting against the force of the compression spring (105);

d) a cover cap (111), which displays a passage (110) with a profile which corresponds to the cross-section of the rear half of the sleeve (103) so that the latter is displaceable in this passage (110), is placed on the housing (104) at the side which faces the Bowden pull hose;

e) the cover cap (111) is rotatable on the housing (104) between two end settings through those 90° which correspond to the angular rotation of the sleeve (103) between its operation setting and its return setting and,

f) after return of the sleeve (103) into its initial setting has taken place, the outwardly projecting edge (103c, 103d) serves on the return of the sleeve (103) into its operative setting as lifting mechanism for the resetting of all shims (106a, 106b) into their initial setting.

**7.** Device according to claim 6, characterised thereby, that the shims are constructed as shim pairs (106a, 106b) and each pair is arranged symmetrically at both sides of the sleeve (103) in a plane perpendicular to the sleeve (103).

**8.** Device according to the claims 6 and 7, characterised thereby, that each shim pair is enclosed by a spring ring (107), which urges both shims (106a, 106b) inwards onto the sleeve.

**9.** Device according to the claims 6 and 8, characterised thereby, that the housing (104) in its wall (104a) has a depression (102), into which the sleeve (103) in its operative setting is insertable so far by its collar (103a) that the sleeve (103) slips out of the passage (110) of the cover cap (111) so that the cover cap is rotatable relative to the sleeve and thereby secures the sleeve in its inserted setting.

**Revendications**

**1.** Dispositif de réglage automatique de la longueur de la gaine (2, 102) d'un câble Bowden, gaine qui sert de guidage à un câble (1, 101) tendu entre un élément de manoeuvre et un organe du mécanisme à manoeuvrer, comportant un boîtier fixe (4, 104) solidaire du bâti ayant un perçage axial à travers lequel on fait passer l'extrémité de la gaine, ainsi qu'un ressort de compression (5, 105) disposé entre le bâti, c'est-à-dire le boîtier (4, 104), et la gaine (2, 102), sollicitant la gaine pour qu'elle sorte hors du perçage axial, caractérisé par un paquet de plaquettes entretoises (6, 106a et 106b) coulissant transversalement par rapport à l'axe de la gaine et disposées parallèlement entre elles, lesquelles plaquettes reposent sur ladite gaine (2, 3, 103) et tombent l'une après l'autre devant l'extrémité de ladite gaine lorsque celle-ci est progressivement repoussée hors du perçage axial par suite d'un raccourcissement de la gaine ou d'un allongement du câble en cours de fonctionnement et qui prennent alors appui d'une part contre la paroi frontale de la gaine (2, 102) et d'autre part contre le boîtier (4, 104) c'est-à-dire contre le bâti (9, 109).

**2.** Dispositif selon la revendication 1, caractérisé en ce que chaque plaquette entretoise (6, 106a, 106b) est équipée d'un ressort (7, 107) qui pousse individuellement chaque plaquette en direction de l'axe longitudinal du câble Bowden.

**3.** Dispositif selon les revendications 1 et 2, caractérisé en ce que l'extrémité de la gaine est formée par une douille (3, 103) dont la surface extérieure s'étendant jusqu'à l'extrémité de la gaine est réduite, un collet (3a, 103a) étant ainsi formé au point de transition entre le grand et le petit diamètre, collet contre lequel les plaquettes entretoises (6, 106a, 106b) prennent appui à l'extrémité de la gaine.

**4.** Dispositif selon les revendications 1 à 3, caractérisé en ce que le paquet de plaquettes entretoises (6, 106a, 106b) est disposé dans un boîtier (4, 104) et en ce que des moyens mécaniques accessibles (11, 111) sont prévus à l'extérieur dudit boîtier (4, 104), moyens dont la manoeuvre permet de ramener les plaquettes entretoises dans leur position initiale.

**5.** Dispositif selon la revendication 4, caractérisé en ce que les plaquettes entretoises individuelles (6) sont pourvues de trous allongés (6a) alignés les uns par rapport aux autres, et en ce que les parois avant et arrière du boîtier (4b, 4c) contiennent également chacun un trou oblong (4b' ; 4c') aligné avec les précédents et en ce que les moyens mécaniques sont constitués par une broche (11) qui passe à travers lesdits trous oblongs (4b' ; 4c' ;6a') et qui peut être saisie à l'extérieur du boîtier, sur ses parois avant et arrière, de telle façon que toutes les plaquettes entretoises (6) qui sont retombées peuvent être ramenées dans leur position initiale en soulevant ladite broche (11).

**6.** Dispositif selon les revendications 1 à 3, caractérisé par les points remarquables suivants :

a) la demi-partie avant de la douille (103) possède de manière connue une section transversale circulaire, alors que la demi-partie arrière possède une section transversale avec une arête (103c, 103d) se dressant vers l'extérieur ;

b) la douille (103) est orientable d'un angle de 90° autour de l'axe longitudinal, entre une position de travail et une position de retour ;

c) chaque plaquette entretoise (106a, 106b) possède en son centre une ouverture telle que toutes les plaquettes entretoises qui sont tombées forment un canal à travers lequel la douille (103) dans sa position de retour peut être ramenée à sa position initiale avec ses arêtes (103c, 103d) se dressant vers l'extérieur à l'encontre de l'effort du ressort de compression (105) ;

d) un couvercle (111) est disposé sur le côté du boîtier (104) orienté vers la gaine de câble Bowden, couvercle qui présente une ouverture (110) ayant un profit qui correspond à la section transversale de la demi-partie arrière de la douille (103) de sorte que cette dernière peut coulisser à travers ladite ouverture (110) ;

e) le couvercle (111) est orientable sur le boîtier (104) entre deux positions extrêmes dudit angle de 90° qui correspond à la rotation angulaire de la douille (103) entre sa position de travail et sa position de retour ; et

f) après avoir ramené la douille (103) dans sa position initiale, l'arête se dressant vers l'extérieur (103c, 103d) sert de mécanisme de relevage pour ramener toutes les plaquettes entretoises (106a, 106b) dans leur position initiale lors du retour de la douille (103) dans sa position de travail.

**7.** Dispositif selon la revendication 6, caractérisé en ce que les plaquettes entretoises sont formées par des paires de plaquettes entretroises (106a, 106b) et en ce que chaque paire est disposée dans un plan perpendiculaire à la douille (103) symétriquement de part et d'autre de cette douille (103).

**8.** Dispositif selon les revendications 6 et 7, caractérisé en ce que chaque paire de plaquettes entretoises est entourée par un ressort annulaire (107) qui pousse les deux plaquettes entretoises (106a, 106b) vers l'intérieur contre la douille.

**9.** Dispositif selon les revendications 6 à 8, caractérisé en ce que le boîtier (104) possède dans sa paroi (104a) un renfoncement (112) dans lequel la douille (103) avec son collet (103a) peut s'enfoncer dans sa position de travail d'une valeur telle que ladite douille (103) échappe de l'ouverture (110) du couvercle (111), de sorte que ledit couvercle peut alors tourner par rapport à la douille et maintenir ainsi la douille dans sa position totalement enfoncée.

Fig.1

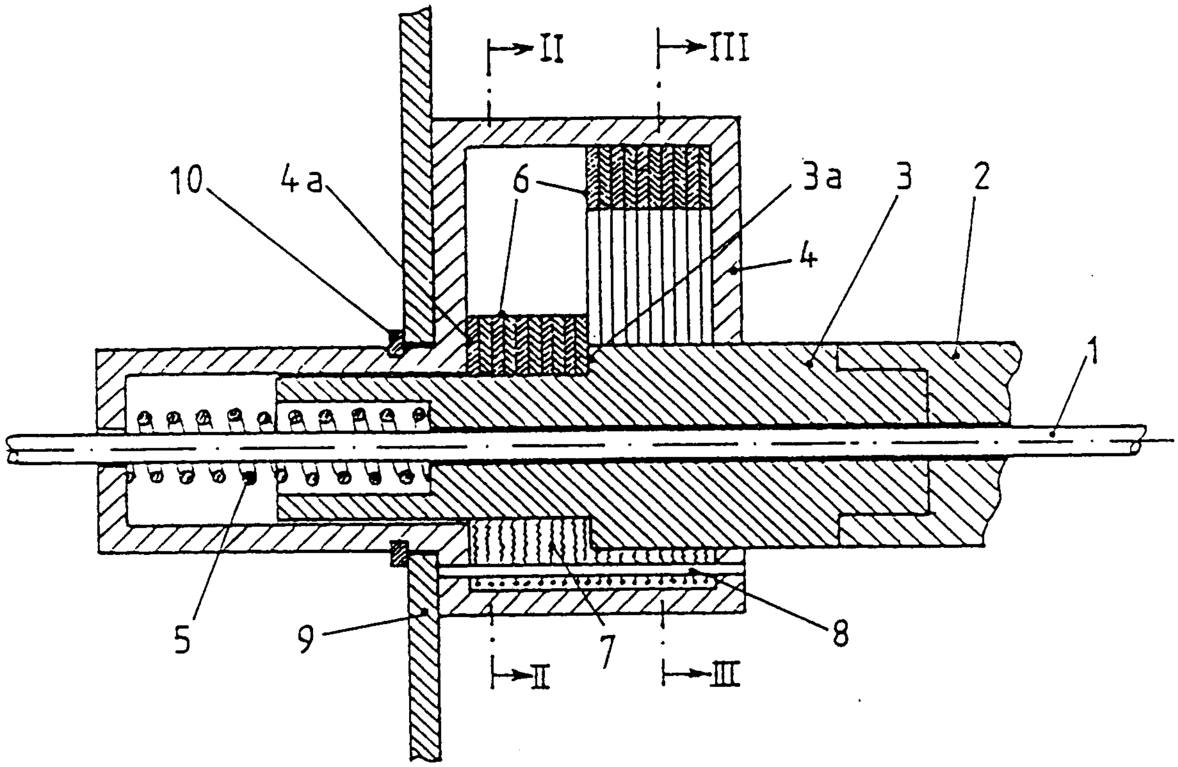


Fig.2

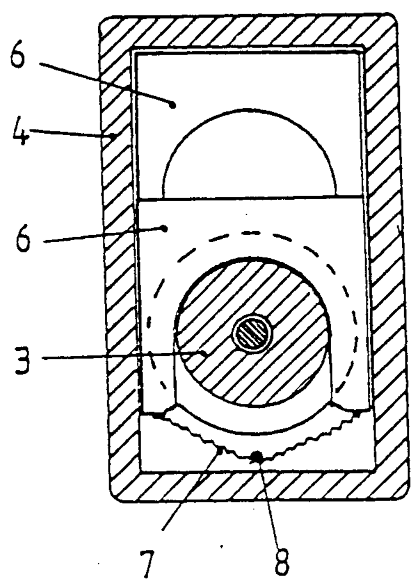


Fig.3

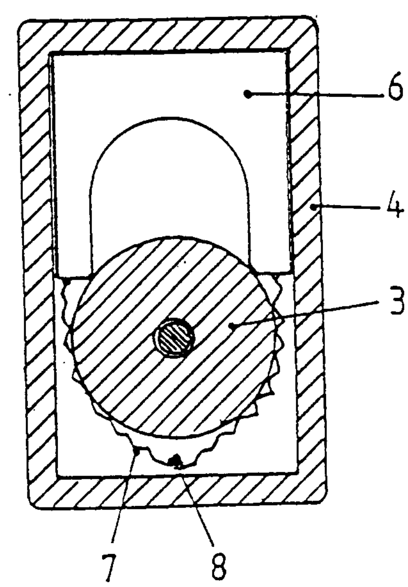

Fig. 4

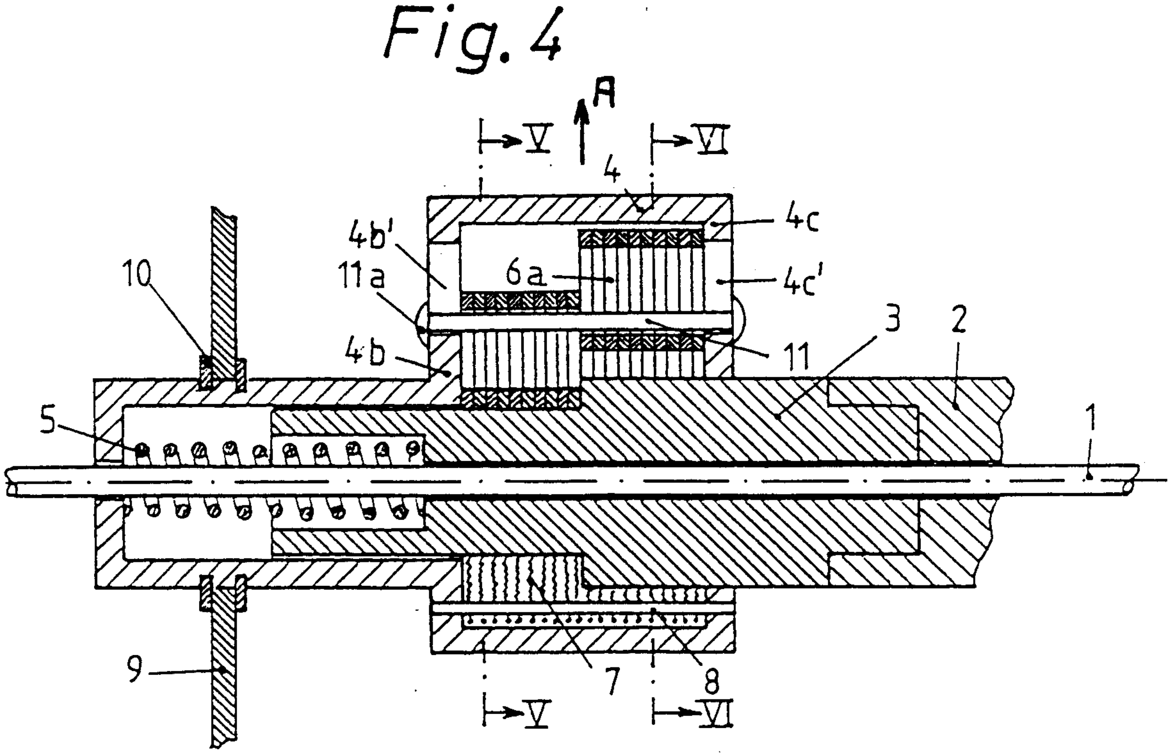


Fig.5

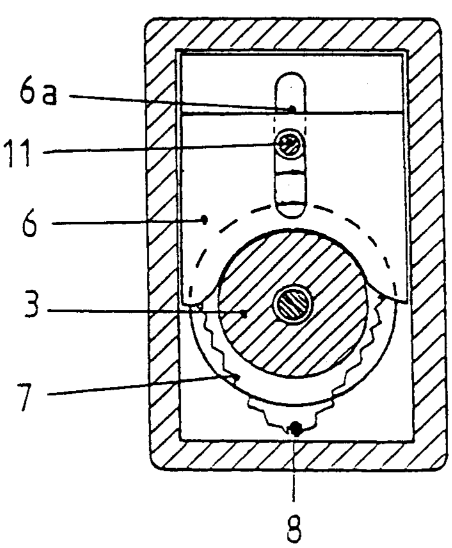


Fig.6

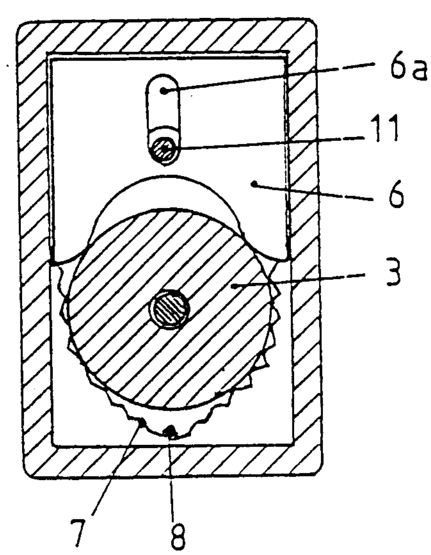

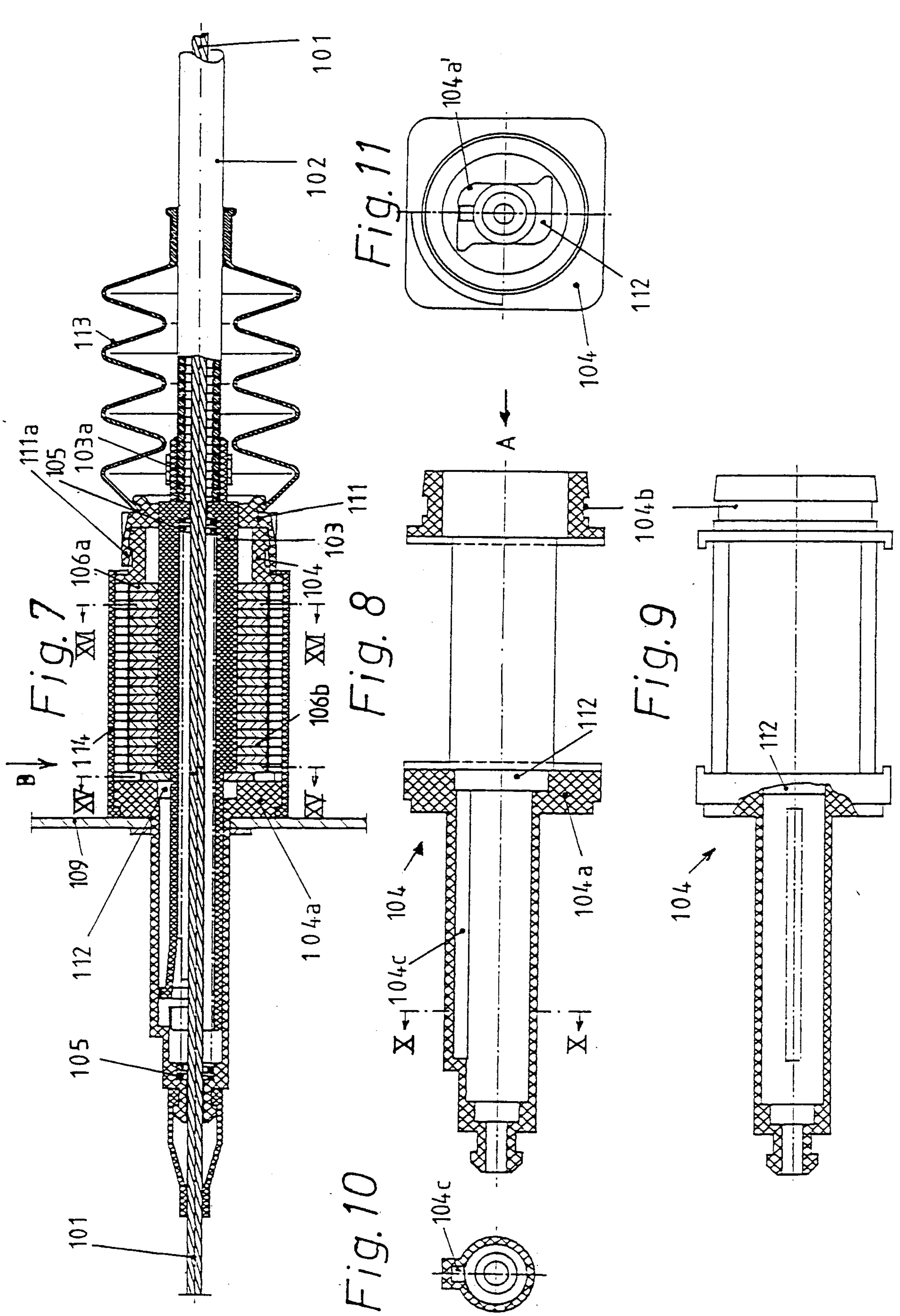
Fig. 7
Fig. 8
Fig. 9
Fig. 10
Fig. 11
101
102
113
111a
105
103a
111
103
106a
104
XVI
114
106b
B
XV
109
112
104a
105
A
104a'
104b
104c
X

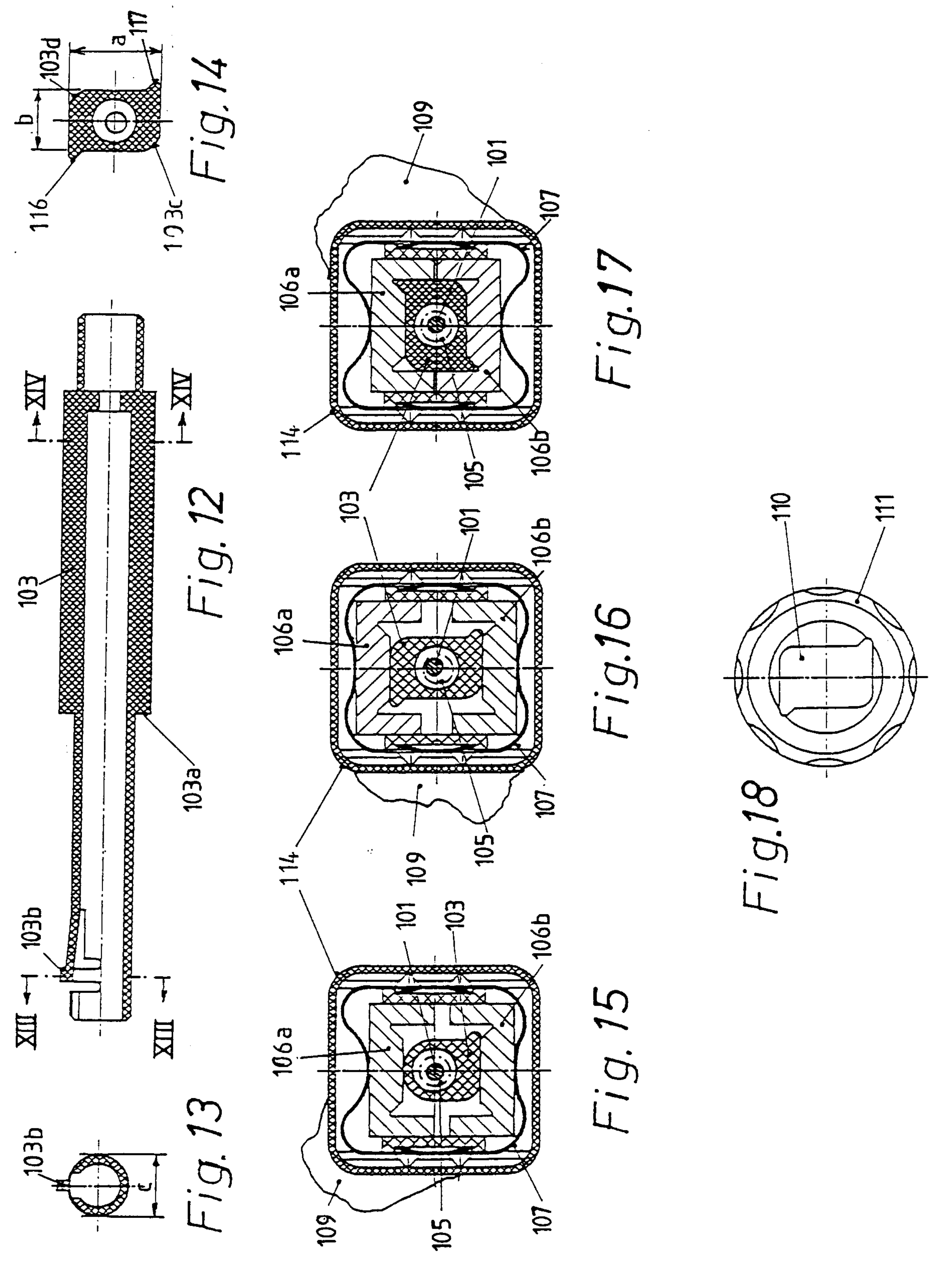

Fig. 12
Fig. 13
Fig.14
Fig. 15
Fig.16
Fig.17
Fig.18
103
103a
103b
103c
103d
116
117
a
b
c
XIII
XIV
101
105
106a
106b
107
109
110
111
114

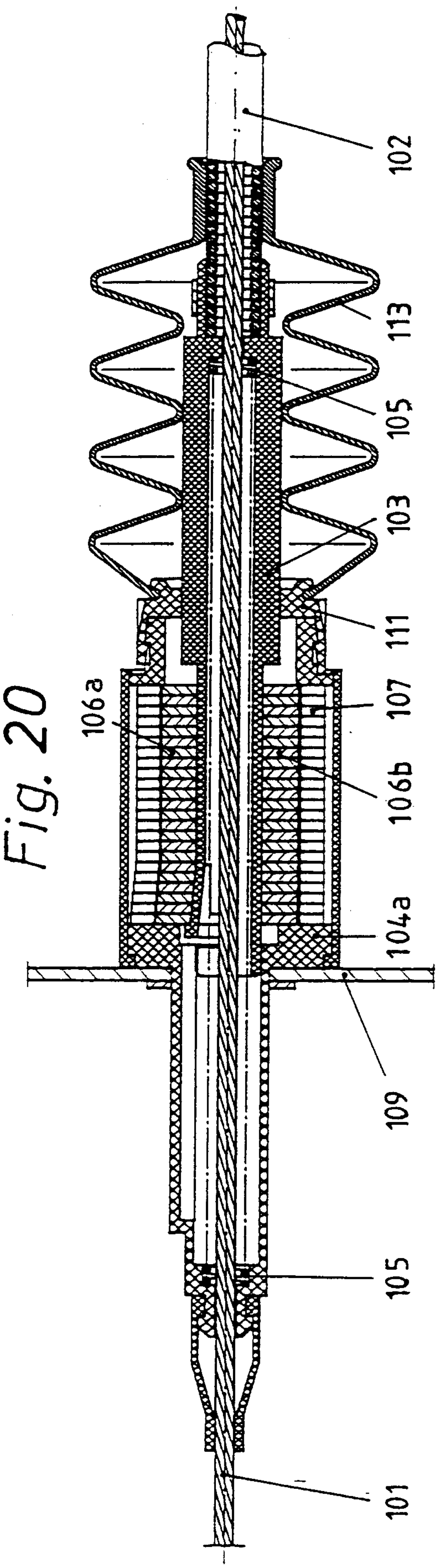
102
113
105
103
111
107
106a
106b
104a
109
105
101

Fig. 20

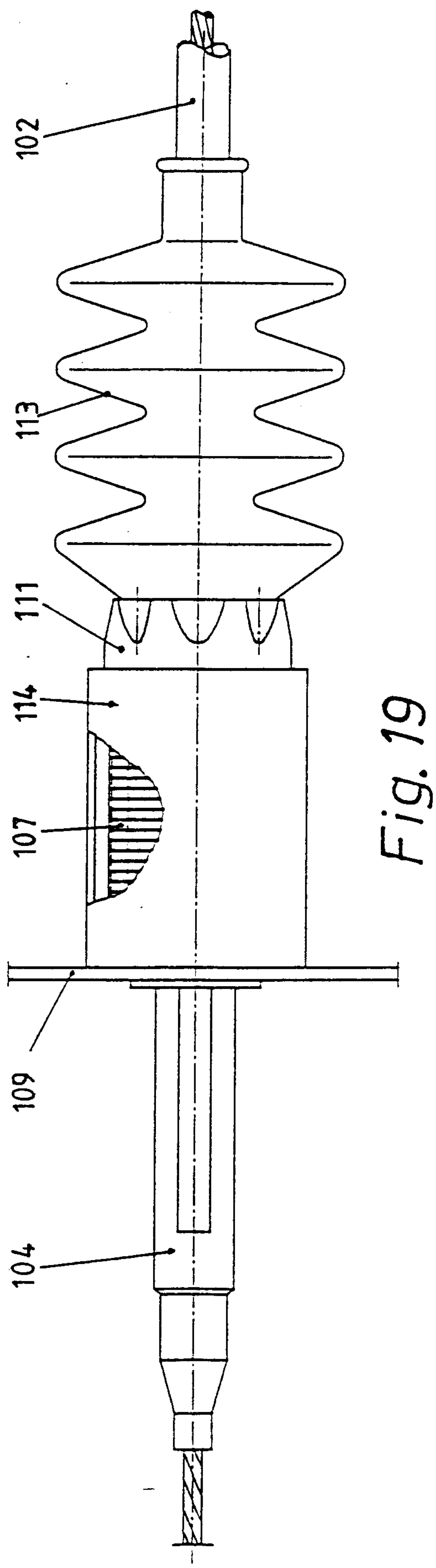
102
113
111
114
107
109
104

Fig. 19

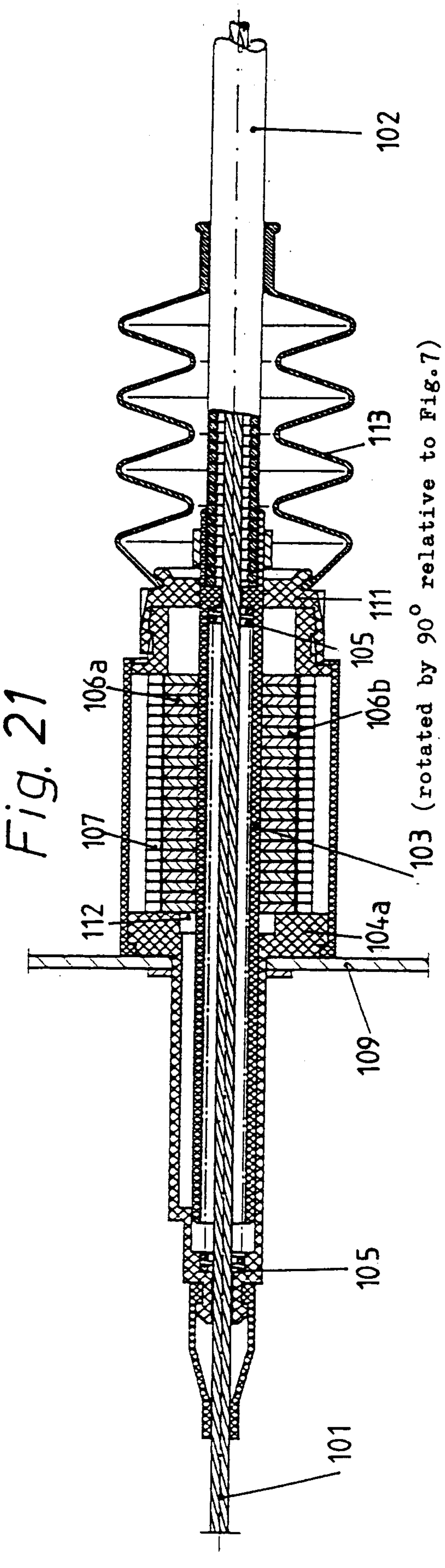
102
113
111
105
106a
106b
107
103 (rotated by 90° relative to Fig.7)
112
104a
109
105
101
Fig. 21

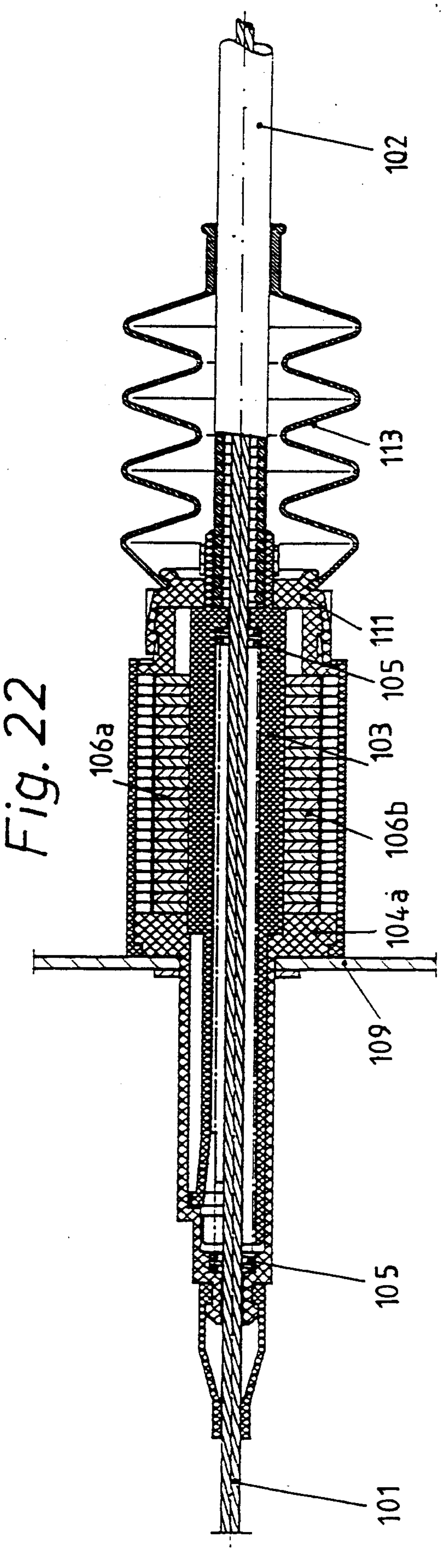
102
113
111
105
103
106a
106b
104a
109
105
101
Fig. 22